# EUROPÄISCHE PATENTSCHRIFT

(11) **EP 0 305 765 B1**
(45) Veröffentlichungstag und Bekanntmachung des Hinweises auf die Patenterteilung: **10.02.1993**
(21) Anmeldenummer: 88112812.8
(22) Anmeldetag: 05.08.1988
(51) Int. Cl.: G01P 15/03

(54) **Beschleunigungssensor für Sicherheits- und/oder Sicherheitsgurtsysteme von Kraftfahrzeugen**
Acceleration sensor for safety systems and/or safety belt systems in motor vehicles
Détecteur d'accélération pour systèmes de sécurité et/ou systèmes de ceintures de sécurité de voiture

(30) Priorität: 10.08.1987 DE 3726576; 03.09.1987 DE 3729518; 17.09.1987 DE 3731289
(43) Veröffentlichungstag der Anmeldung: 08.03.1989
(73) Patentinhaber: Autoliv-Kolb GmbH & Co., D-85203 Dachau (DE)
(72) Erfinder: Knabel, Walter, Dr., D-8110 Murnau/Staffelsee (DE); Mayer, Josef, D-8061 Weichs (DE); Wentker, Stephan, D-8060 Dachau (DE); Notar, Walter, D-8044 Unterschleissheim (DE)
(74) Vertreter: Gossel, Hans K., Dipl.-Ing.

(56) Entgegenhaltungen:
- WO-A-82/03990
- FR-A- 2 349 837
- GB-A- 2 032 065

## Beschreibung

Die Erfindung betrifft einen Beschleunigungssensor für Sicherheits- und/oder Sicherheitsgurtsysteme von Kraftfahrzeugen, vorzugsweise für sogenannte Schloßstrammer, bestehend aus einer verschieblich geführten oder an einem schwenkbaren Hebel befestigten Sensormasse, die durch Haltemittel in ihrer Ruhelage gehalten ist und die bei Auslenkung aus ihrer Ruhelage infolge des Auftretens vorbestimmter kritischer Beschleunigungswerte über eine Betätigungseinrichtung oder den Hebel eine Verriegelungseinrichtung löst, wobei der Hebel oder die Masse im Abstand von einem Auslöseelement der Verriegelungseinrichtung in ihrer Ruhe-lage gehalten sind, so daß sie erst auf das Auslöseelement treffen, wenn sie nach Verlassen der Ruhelage einen Weg vorbestimmter Länge zurückgelegt haben.

Derartige Beschleunigungssensoren dienen in sogenannten fahrzeugsensitiven Auslösesystemen der Blockierung von Gurtaufrollen, Gurtklemmmvorrichtungen und/oder sogenannten Gurtstrammern. Sie können auch zur Aktivierung von Airbags oder anderen Sicherheitssystemen eingesetzt werden. Sie sprechen bei Auftreten vorbestimmter kritischer Beschleunigungswerte an, die den bei einem Unfall oder einem sogenannten Crash auftretenden Beschleunigungs- oder Verzögerungswerten entsprechen.

Die durch Fahrzeugsicherheitsgurte erreichbare Sicherheit kann durch Gurtstrammer noch weiter erhöht werden, die unmittelbar nach Auftreten von einem Unfall oder einem sogenannten Crash entsprechenden Beschleunigungs- oder Verzögerungswerten den Sicherheitsgurt spannen, so daß die zu sichernde Person in ihren Sitz bereits durch den Gurt fest gegen den Sitz und die Rückenlehne gehalten wird, bevor sie aufgrund der Trägheitskräfte ihres Körpers und einer Relativbewegung gegenüber dem Fahrzeug den Gurt ausziehen kann. Ein gattungsgemäßer Beschleunigungssensor ist bereits aus der FR-A-2 349 837 bekannt. Bei diesem vorbekannten Beschleunigungssensor sind im Übertragungssystem verhältnismäßig hohe Reibungskräft wirksam, so daß der Beschleunigungssensor erhebliche Kräfte aufbringen muß und sich nicht feinfühlig auf die gewünschten Beschleunigungs- oder Verzögerungswerte einstellen läßt.

Aufgabe der vorliegenden Erfindung ist es daher, einen derartigen gattungsgemäßen Beschleunigungssensor derart weiterzubilden, daß er sich mit großer Genauigkeit auf vorgegebene, einen Unfall oder Crash ensprechende Beschleunigungs- bzw. Verzögerungswerte einrichten läßt.

Erfindungsgemäß wird diese Aufgabe durch den Sensor nach Anspruch 1 gelöst. Demnach ist der die Masse tragende Sensorhebel gleichachsig mit einem das Auslöseelement bildenden Blockierhebel der Verriegelungseinrichtung gelagert, wobei der Sensorhebel mit einem Mitnehmerstift o.dgl. und der Blockierhebel mit einem einen Anschlag bildenden Vorsprung o.dgl. versehen sind, die in derselben radialen Ebene angeordnet sind und einen Abstand voneinander aufweisen. Wenn also der Sensorhebel aufgrund des Auftretens kritischer Beschleunigungswerte ausgelenkt worden ist, trifft dessen Mitnehmerstift auf den Anschlag des Blockierhebels und schlägt diesen aus seiner blockierenden Ruhelage.

Da der Hebel oder die Masse im Abstand von einem Auslöseelement der Verriegelungseinrichtung in ihrer Ruhelage gehalten sind, treffen sie erst auf das Auslöseelement, wenn sie nach Verlassen der Ruhelage einen Weg zurückgelegt haben. Der Beschleunigungssensor ist somit mit so großem Spiel an die Verriegelungseinrichtung angekuppelt, daß Trägheits- und Reibungskräfte der Verriegelungseinrichtung die Auslenkung der Masse des Beschleunigungssensors aus seiner Ruhelage nicht beeinträchtigen können. Erst wenn die Masse aufgrund der kritischen Beschleunigungs- oder Verzögerungswerte aus ihrer Ruhelage ausgelenkt worden ist, trifft sie unmittelbar oder über den diese tragenden Hebel auf das Auslöseelement, das sodann aufgrund der kinetischen Energie der bereits beschleunigten Masse dadurch ausgelöst wird, daß es gleichsam aus seiner Ruhelage herausgeschlagen wird. Bei dem Beschleunigungssensor wird also die in der Ruhelage gehaltene Masse durch kritische Beschleunigungswerte unbeeinflußt durch Rückwirkungen der Verriegelungseinrichtung ausgelenkt. Befindet sich die Sensormasse einmal in Bewegung, vermag sie die Verriegelungseinrichtung zu lösen, ohne daß deren Trägheit und deren Haftreibung noch zu einer Verfälschung des Auslösewertes führen können. Die die Beschleunigungsmasse des Beschleunigungssensors in ihrer Ruhelage haltenden Haltemittel können somit feinfühlig und genau auf die gewünschten Auslösewerte eingestellt werden.

Der Blockierhebel kann mit einem Anschlag versehen sein, auf den ein Arm eines Verriegelungshebels der Verriegelungseinrichtung abgestützt ist. Der Anschlag kann mit einer Rastmulde versehen sein, in die eine abgewinkelte Nase des Blockierhebels greift. Durch die Rastmulde ist daher der Blockierhebel in seiner Ruhestellung zentriert.

Nach einer erfinderischen Ausgestaltung ist vorgesehen, daß die Verriegelungseinrichtung einen federbelasteten Zuganker o.dgl. des Schloßstrammers in seiner Bereitschaftsstellung hält und aus einem Getriebemechanismus besteht, der die auf diese von dem Zuganker wirkende Kraft derart untersetzt, daß auf das Anschlagteil des Auslöseelements nur noch ein Bruchteil der Kraft des Zugankers wirkt. Findet eine entsprechende Untersetzung der Kräfte statt, braucht der Beschleunigungssensor ebenfalls nur noch geringe Kräfte zur Auslösung des Verriegelungssystems aufzubringen.

In weiterer Ausgestaltung der Erfindung ist vorgesehen, daß der Getriebemechanismus aus zwei Verriegelungshebeln besteht, daß der erste Verriegelungshebel als zweiarmiger Hebel ausgebildet ist und mit einem verriegelnden Anschlag für den längeren Arm des zweiten zweiarmigen Verriegelungshebels versehen ist, dessen kürzerer Arm über eine hakenförmige Anschlagfläche in eine Ausnehmung eines federbelasteten Zugankers eines Gurtstrammers greift, und daß die Winkel der Anschlagflächen und die Hebelarmlängen derart gewählt sind, daß sich der erste Verriegelungshebel mit einem Bruchteil der Kraft des Zugankers auf dem Anschlagteil des Auslöseelements abstützt.

Der Sensorhebel kann durch eine Zugfeder gegen einen fahrzeugfesten Anschlag gehalten sein.

Sollen in entgegengesetzten Richtungen wirkende Beschleunigungswerte zu einer Auslösung führen, kann der Sensorhebel durch gegenüberliegende Zugfedern in seiner Ruhelage gehalten sein.

In allen Richtungen wirkende Beschleunigungswerte können dann zu einer Auslösung des Sensorhebels führen, wenn dieser durch ein Universalgelenk gelagert ist und durch mehrere diesen in gleichen Winkelabständen umgebende Zugfedern in seiner Ruhelage gehalten ist.

Ausführungsbeispiele der Erfindung werden nachstehend anhand der Zeichnung näher erläutert. In dieser zeigt
- Fig.1:: einen Längsschnitt durch einen Gurtstrammer mit einem fahrzeugsensitiven Auslösesystem,
- Fig.2:: eine Ausführungsform eines aus einem Sensorhebel mit Sensormasse und einem Blockierhebel bestehenden Beschleunigungssensors in schematischer Darstellung, und
- Fig.3:: eine Seitenansicht eines Beschleunigungssensors mit einer den Zuganker eines Schloßstrammers blockierenden Verrriegelungseinrichtung.

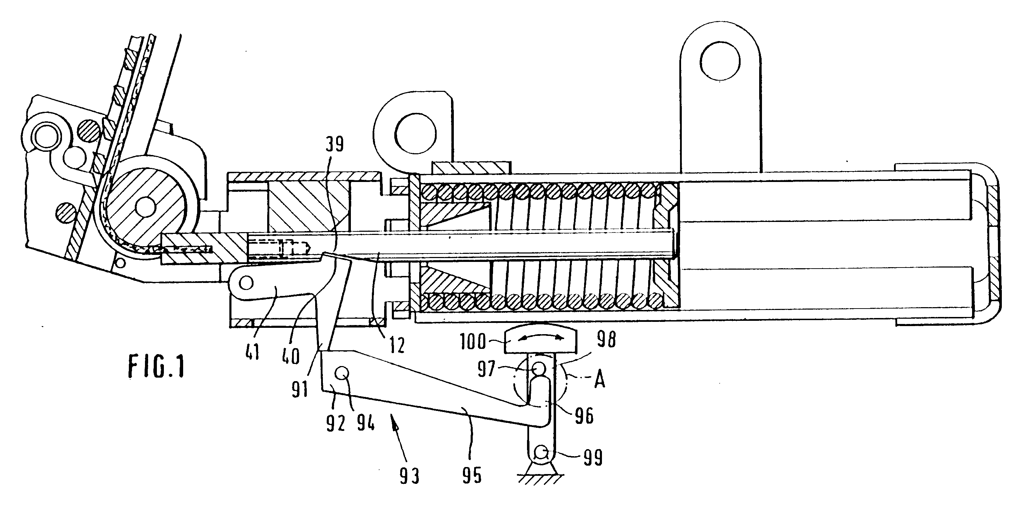

In Fig. 1 ist schematisch ein an sich bekannter Gurtstrammer gezeigt. Ein hakenförmiges Teil 40 eines Verriegelungshebels 41 greift in einen federbelasteten Zuganker 12 ein. Der Verriegelungshebel 41 ist auf der der Rastausnehmung 39 gegenüberliegenden Seite mit einem Fortsatz 91 versehen, der in der dargestellten Weise auf den Endbereich des kürzeren Hebelarmes 92 des zweiarmigen Übertragungshebels 93 abgestützt ist. Der Übertragungshebel 93 ist auf einem Gelenkbolzen 94 schwenkbar gelagert, der an einem fahrzeugfesten Teil, beispielsweise einem Sitzblech angeordnet ist. Der längere Hebelarm 95 des Übertragungshebels 93 weist an seinem freien Ende ein nach oben abgewinkeltes Endteil 96 auf. Dieses Endteil ist auf einem Halte- und Steuernocken 97 abgestützt, der im oberen Bereich des Sensorhebels 98 vorgesehen ist, der in seinem unteren Bereich schwenkbar an einem fahrzeugfesten Teil, beispielsweise einem Sitzblech, gelagert ist. Die Lagerung besteht aus einem fahrzeugfesten Lagerbolzen 99. Der Sensorhebel 98 trägt an seinem oberen freien Ende einen verbreiterten Kopf 100, der die Schwerkraftmasse bildet.

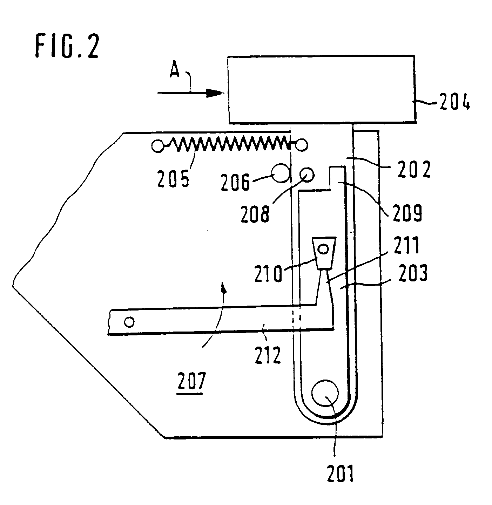

In Fig. 2 ist ein Ausführungsbeispiel des erfindungsgemäßen Beschleunigungssensors dargestellt. Bei diesem Ausführungsbeispiel ist an einem Rahmenblech oder Seitenblech eines Fahrzeugsitzes auf einem Achszapfen 201 ein Sensorhebel 202 und parallel zu diesem ein Blockierhebel 203 schwenkbar gelagert. Der Sensorhebel 202 ist aufrecht stehend gelagert und trägt an seinem oberen Ende hammerartig die Sensormasse 204. Der Sensorhebel 202 ist in der dargestellten Weise durch eine Zugfeder 205, die vorzugsweise in ihrer Vorspannung einstellbar ist, in Anlage an einen Anschlagzapfen 206 gehalten, der auf einem Seitenblech 207 angeordnet ist.

Der Sensorhebel 202 weist einen auskragenden Mitnehmerzapfen 208 auf. Der Blockierhebel ist in Höhe des Mitnehmerzapfens 208 mit einer Anschlagnase 209 versehen. Weiterhin trägt der Blockierhebel in seinem mittleren Bereich ein Widerlager 210 mit einer unteren Anschlagfläche, auf der die nach oben ragende Nase 211 des zweiarmigen Verriegelungshebel 212 abgestützt ist.

Wirkt auf die Sensormasse in Richtung des Pfeils A eine Beschleunigung, wird der Sensorhebel 202 im Uhrzeigersinn ausgeschwenkt, wenn die Kraft, die sich aus dem Produkt der Beschleunigung und der Sensormasse ergibt, die Kraft der Feder übersteigt. Nach dem Auslenken des Sensorhebels trifft der Mitnehmerstift 208 nach kurzem Schwenkweg, der beispielsweise 2 mm betragen kann, auf die Anschlagnase 209 des Blockierhebels 203 und schlägt diesen aus seiner Ruhelage, so daß der Verriegelungshebel 209 von der Anschlagfläche des Widerlagers 210 freikommt.

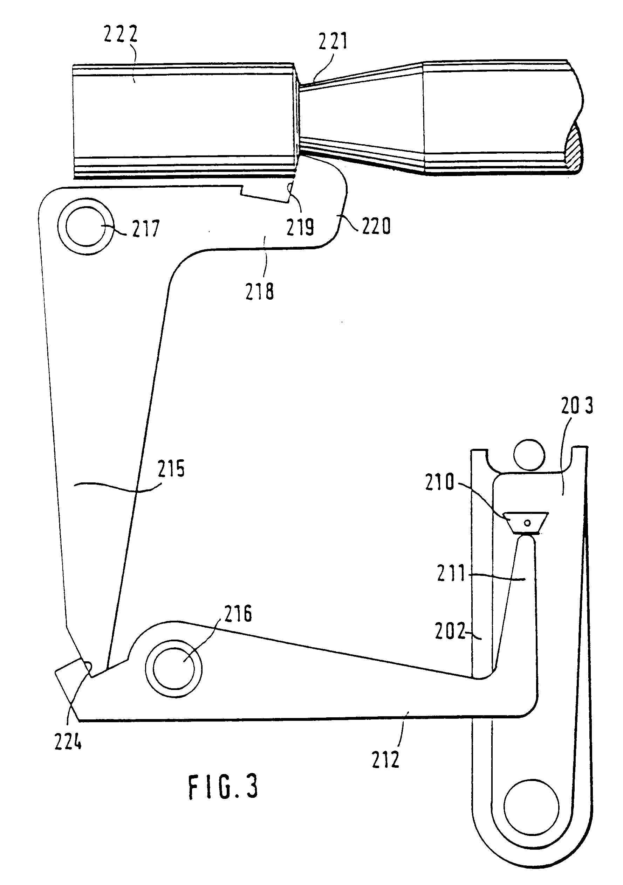

Bei dem Ausführungsbeispiel nach Fig.3 blockiert ein Beschleunigungssensor der anhand der Fig.2 beschriebenen Art eine Verriegelungseinrichtung, die aus den Verriegelungshebeln 212 und 215 besteht. Die Verriegelungshebel 212 und 215 sind als zweiarmige Hebel ausgebildet und schwenkbar auf den Zapfen 216 und 217 gelagert, die beispielsweise an einem Rahmenblech eines Sitzes befestigt ist. Der Hebel 215 ist als Winkelhebel ausgebildet, wobei der kürzere Hebelarm 218 mit der Flanke 219 seines endseitigen Hakens 220 in eine Ringnut 221 mit abgeschrägten Flanken des Zugankers 22 eines Gurtstrammers greift. Der Verriegelungshebel 215 greift mit seinem längeren Hebelarm hinter die hakenartige Anschlagfläche 224 des kürzeren Hebelarms des Verriegelungshebels 212. Die Hebelarmlängen und die Schrägungen der Anschlagflächen sind derart gewählt, daß auf das Widerlager 210 des Blockierhebels 203 nur noch etwa ein Hundertstel der Zugkraft des Zugankers wirkt.

## Patentansprüche

1. Beschleunigungssensor für Sicherheits- und/oder Sicherheitsgurtsysteme von Kraftfahrzeugen, vorzugsweise für sogenannte Schloßstrammer, bestehend aus einer verschieblich geführten oder an einem schwenkbaren Hebel (202) befestigten Sensormasse (204), die durch Haltemittel in ihrer Ruhelage gehalten ist und die bei Auslenkung aus ihrer Ruhelage infolge des Auftretens vorbestimmter kritischer Beschleunigungswerte über eine Betätigungseinrichtung oder den Hebel (202) eine Verriegelungseinrichtung löst, wobei der Hebel (202) oder die Masse (204) im Abstand von einem Auslöseelement (203) der Verriegelungseinrichtung in ihrer Ruhelage gehalten sind, so daß sie erst auf das Auslöseelement (203) treffen, wenn sie nach Verlassen der Ruhelage einen Weg vorbestimmter Länge zurückgelegt haben,
**dadurch gekennzeichnet,**
daß der die Masse (204) tragende Sensorhebel (202) gleichachsig mit einem das Auslöseelement bildenden Blockierhebel (203) der Verriegelungseinrichtung gelagert ist und daß der Sensorhebel (202) mit einem Mitnehmerstift (208) und der Blockierhebel (203) mit einem einen Anschlag bildenden Vorsprung (209) versehen sind, die in derselben radialen Ebene angeordnet sind und einen Abstand voneinander aufweisen.

2. Beschleunigungssensor nach Anspruch, dadurch gekennzeichnet, daß der Blockierhebel (203) mit einem Anschlag (210) versehen ist, auf dem ein Arm eines Verriegelungshebels der Verriegelungseinrichtung abgestützt ist.

3. Beschleunigungssensor nach einem der Ansprüche 1 oder 2, dadurch gekennzeichnet, daß der Anschlag mit einer Rastmulde versehen ist, in die eine abgewinkelte Nase des Blockierhebels greift.

4. Beschleunigunssensor nach einem der Ansprüche 1-3, dadurch gekennzeichnet, daß die Verriegelungseinrichtung einen federbelasteten Zuganker (222) des Schloßstrammers in seiner Bereitschaftstellung hält und aus einem Getriebemechanismus besteht, der die auf diese von dem Zuganker wirkende Kraft derart umsetzt, daß auf das Anschlagteil des Auslöseelements nur noch ein Bruchteil der Kraft des Zugankers wirkt.

5. Beschleunigungssensor nach Anspruch 4, dadurch gekennzeichnet, daß der Getriebemechanismus aus zwei Verriegelungshebeln (212, 215) besteht, daß der erste Verriegelungshebel (212) als zweiarmiger Hebel ausgebildet ist und mit einem verriegelnden Anschlag (224) für den längeren Arm des zweiten zweiarmigen Verriegelungshebels (215) versehen ist, dessen kürzerer Arm (218) über eine hakenförmige Anschlagfläche (219) in eine Ausnehmung (221) des federbelasteten Zugankers (222) eines Gurtstrammers greift, und daß die Winkel der Anschlagflächen und die Hebelarmlängen derart gewählt sind, daß sich der erste Verriegelungshebel mit einem Teil der Kraft des Zugankers auf dem Anschlagteil des Auslöseelements abstützt.

6. Beschleunigungssensor nach einem der Ansprüche 1-5, dadurch gekennzeichnet, daß der Sensorhebel (202) durch eine Zugfeder (205) gegen einen fahrzeugfesten Anschlag (206) gehalten ist.

7. Beschleunigungssensor nach einem der Ansprüche 1-5, dadurch gekennzeichnet, daß der Sensorhebel (202) durch gegenüberliegende Zugfedern in seiner Ruhelage gehalten ist.

8. Beschleunigungssensor nach einem der Ansprüche 1-5, dadurch gekennzeichnet, daß der durch ein Universalgelenk gelagerte Sensorhebel (202) durch mehrere diese in gleichem Winkel umgebende Zugfedern der Ruhestellung gehalten ist.

## Claims

1. An acceleration sensor for safety systems and/or safety belt systems of motor vehicles, preferably for so-called buckle pretensioners, comprising a sensor mass (204) which is slidingly supported or supported on a pivoting lever (202), and is held in its neutral setting by holding means and which on displacement out of such neutral setting as a consequence of the occurrence of predetermined, critical acceleration values unlocks a locking means via an actuating device or the lever (202), such lever (202) or the mass (204) being held at a distance from an operational element (203) of the locking device in the neutral setting thereof with the result that it only strikes the operational element (203) when, after leaving the neutral setting, it has moved along a path with a predetermined length,
**characterized in that**
the sensor lever (202) bearing the mass (204) is journaled coaxially with a locking lever (203) constituting the operational element, of the locking device and in that the sensor lever (202) is furnished with an entraining pin (208) and the locking lever (203) is furnished with a projection (209) constituting an abutment, which are arranged in a common radial plane and have a distance between them.

2. The acceleration sensor as claimed in claim 1, characterized in that the locking lever (203) is furnished with an abutment (210), on which one arm of a locking lever of the locking device bears.

3. The acceleration sensor as claimed in claim 1 or in claim 2, characterized in the abutment is provided with a catch groove, into which there fits the bent head of the locking lever.

4. The acceleration sensor as claimed in any one of the claims 1 through 3, characterized in that the locking device holds a spring-loaded tension member (222) of the buckle pretensioner in its standby position and comprises a drive mechanism which so converts the force acting on the tension member that only a fraction of the force of the tension member acts on the abutment part of the operational element.

5. The acceleration sensor as claimed in claim 4, characterized in that the drive mechanism comprises two locking levers (212 and 215), in that the first locking lever (212) is in the form of a first class lever and is furnished with a locking abutment (214) for the longer arm of the second first class locking lever (215), whose shorter arm (218) fits via a hook-shaped abutment surface (219) into a recess (221) in the spring-loaded tension member (222) of a belt retractor, and in that the angle of the abutment surfaces and the lengths of the lever arms are so selected that the first locking lever bears against the abutment part of the operational element with the force of the tension member.

6. The acceleration sensor as claimed in any one of the claims 1 through 5, characterized in that the sensor lever (202) is held by a tension spring (205) against an abutment (206) fixed to the vehicle.

7. The acceleration sensor as claimed in any one of the claims 1 through 5, characterized in that the sensor lever (202) is held in its neutral setting by oppositely arranged tension springs.

8. The acceleration sensor as claimed in any one of the claims 1 through 5, characterized in that the sensor lever (202), which is carried by a universal joint, is held in the neutral setting by a multiplicity of tension springs arranged at the same angle.

## Revendications

1. Détecteur d'accélération pour des systèmes de sécurité et/ou systèmes de ceintures de sécurité de véhicules automobiles, de préférence pour des soi-disants raidisseurs de verrou, comprenant une masse formant capteur (204) guidée de façon déplaçable ou fixée sur un levier pivotant (202) qui est maintenu par des moyens de maintien dans sa position de repos et qui, lorsqu'elle sort de sa position de repos à la suite de l'apparition de valeurs d'accélération critiques prédéterminées, relâche par l'intermédiaire d'un dispositif d'actionnement ou le levier (202) un dispositif de verrouillage, le levier (202) ou la masse (204) étant maintenus à une certaine distance par un élément de déclenchement (203) du dispositif de verrouillage dans leur position de repos, de sorte qu'ils heurtent l'élément de déclenchement (203) seulement lorsque, après avoir quitté la position de repos, ils ont parcouru un trajet d'une longueur prédéterminée, caractérisé
en ce que,
le levier formant capteur (202) supportant la masse (204) est disposé sur le même axe avec un levier de blocage (203) du dispositif de verrouillage et constituant l'élément de déclenchement, et en ce que le levier formant capteur (202) est pourvu d'un goujon d'entraînement (208) et le levier de blocage (203) d'une saillie (209) formant une butée qui sont disposés dans le même plan radial et qui présentent un certain écart l'un par rapport à l'autre.

2. Détecteur d'accélération selon la revendication 1, caractérisé en ce que le levier de blocage (203) est pourvu d'une butée (210) sur laquelle prend appui un bras d'un levier de verrouillage du dispositif de verrouillage.

3. Détecteur d'accélération selon l'une des revendications 1 ou 2, caractérisé en ce que la butée est pourvue d'un enfoncement de verrouillage dans lequel rentre un nez coudé du levier de blocage.

4. Détecteur d'accélération selon l'une des revendications 1 à 3, caractérisé en ce que le dispositif de verrouillage maintient un tirant d'ancrage (222) soumis à l'action d'un ressort du raidisseur de verrou dans sa position d'attente et est constitué d'un mécanisme d'engrenage qui transforme la force agissant du tirant d'ancrage sur celui-ci de façon que seulement une fraction de la force du tirant d'ancrage agit encore sur la partie formant butée de l'élément de déclenchement.

5. Détecteur d'accélération selon la revendication 4, caractérisé en ce que le mécanisme d'engrenage est constitué de deux leviers de verrouillage (212, 215), que le premier levier de verrouillage (212) est réalisé comme levier à deux bras et est équipé d'une butée verrouillante (224) pour le bras plus long du deuxième levier de verrouillage (215) à deux bras, dont le bras plus court (218) rentre par une sur face formant butée en forme de crochet (219) dans un évidement (221) du tirant d'ancrage (222) soumis à l'action d'un ressort d'un raidisseur de ceinture, et que les angles des sur faces formant butée et les longueurs des bras de levier sont choisis de façon que le premier levier de verrouillage prenne appui par une partie de la force du tirant d'ancrage sur la partie formant butée de l'élément de déclenchement.

6. Détecteur d'accélération selon l'une des revendications 1 à 5, caractérisé en ce que le levier formant capteur (202) est maintenu par un ressort de traction (205) contre une butée (206) solidaire du véhicule.

7. Détecteur d'accélération selon l'une des revendications 1 à 5, caractérisé en ce que le levier formant capteur (202) est maintenu dans sa position de repos par des ressorts de traction opposés.

8. Détecteur d'accélération selon l'une des revendications 1 à 5, caractérisé en ce que le levier formant capteur (202) logé par une articulation universelle est maintenu en position de repos par plusieurs ressorts de traction entourant celui-ci à angle égal.
